# FASCICULE DE BREVET EUROPEEN

(11) **EP 0 439 977 B1**
(45) Date de publication et mention de la délivrance du brevet: **31.03.1993**
(21) Numéro de dépôt: 90403723.1
(22) Date de dépôt: 20.12.1990
(51) Int. Cl.: F16D 65/16, B60T 17/08

(54) **Frein à disque à coin**
Keilbetätigte Scheibenbremse
Wedge actuated disc brake

(30) Priorité: 31.01.1990 FR 9001119
(43) Date de publication de la demande: 07.08.1991
(73) Titulaire: ALLIEDSIGNAL EUROPE SERVICES TECHNIQUES, 93700 Drancy (FR)
(72) Inventeur: Bejot, Philippe Bendix Europe Sv Techniques, 93700 Drancy (FR); Fabbro, Edgar Bendix Europe Sv Techniques, 93700 Drancy (FR)

(56) Documents cités:
- DE-A- 3 717 072
- FR-A- 1 589 010
- FR-A- 2 560 319
- US-A- 3 980 159

## Description

La présente invention concerne les freins à disque à étrier coulissant comportant un mécanisme d'actionnement du type à coin. De tels freins sont généralement mis en oeuvre dans les véhicules automobiles de type poids lourds, et sont bien connus de l'homme du métier.

Le document EP-A-0 161 119 décrit un exemple d'un tel frein. Un piston est couplé à un patin de freinage et l'étrier à un autre patin. Des surfaces inclinées convergentes d'un coin coopérant avec des rouleaux entre les surfaces du piston et de l'étrier permettant d'écarter relativement celles-ci l'une de l'autre par déplacement longitudinal du coin et donc d'assurer la mise en contact des patins de freinage et du disque. La force appliquée au coin est donc transformée en deux forces opposées et perpendiculaires au plan du disque. Cette force appliquée au coin est engendrée par un vase à diaphragme fixé à l'étrier et généralement commandé par air comprimé. La force de réaction est donc directement appliquée au moyen de fixation du vase à l'étrier.

De façon également connue, l'étrier coulisse par rapport à la chape sur au moins une colonnette fixée à la chape. Cette colonnette reçoit une partie importante de l'effort de freinage. En effet lors du freinage, la friction entre le patin entraîné par l'étrier et le disque engendre une force parallèle au disque et dirigée dans le sens de rotation du disque. Cette force est perpendiculaire à l'axe de la colonnette et tend à faire tourner l'étrier autour de la zone de contact entre l'étrier et la colonnette. Il en résulte une flexion de cette dernière qui doit alors être surdimensionnée, et un coulissement moins aisé de l'étrier sur la colonnette au fur et à mesure de l'augmentation de la force de freinage.

L'invention a pour objet d'obvier à cet inconvénient en évitant de faire travailler la colonnette en flexion.

L'invention concerne donc un frein à disque comportant une chape, un étrier coulissant sur au moins une colonnette et un mécanisme d'actionnement, ce dernier comprenant un mécanisme à coin déplaçable longitudinalement entre l'étrier et un piston pour les écarter l'un de l'autre, sous l'action d'un poussoir lui-même mu par la tige de poussée d'un organe de commande.

Dans les documents DE-A-3 717 072 et FR-A-1 589 010, la force de freinage est générée par un organe fixé à l'étrier et il n'en résulte aucune force de réaction s'opposant à la flexion de la colonnette lors d'un freinage.

Selon l'invention, l'organe de commande est solidaire de la chape du frein et le poussoir exerce sur le coin une force dont la composante principale est parallèle au plan du disque et dirigée dans le sens de rotation majoritaire de ce dernier. Cette force prenant appui sur la chape et s'opposant à une flexion de la colonnette.

De préférence, le poussoir est mu par la tige de poussée par l'intermédiaire d'une pièce faisant levier dont le pivot est solidaire de la chape, et le poussoir est fixé d'une part à la pièce faisant pivot et d'autre part au coin par des articulations à rotule.

L'invention sera mieux comprise, et d'autres avantages, buts et caractéristiques de celle-ci apparaîtront plus clairement à la lecture de la description qui suit d'un mode de réalisation préféré donné à titre non limitatif et à laquelle une planche de dessins est annexée sur laquelle :

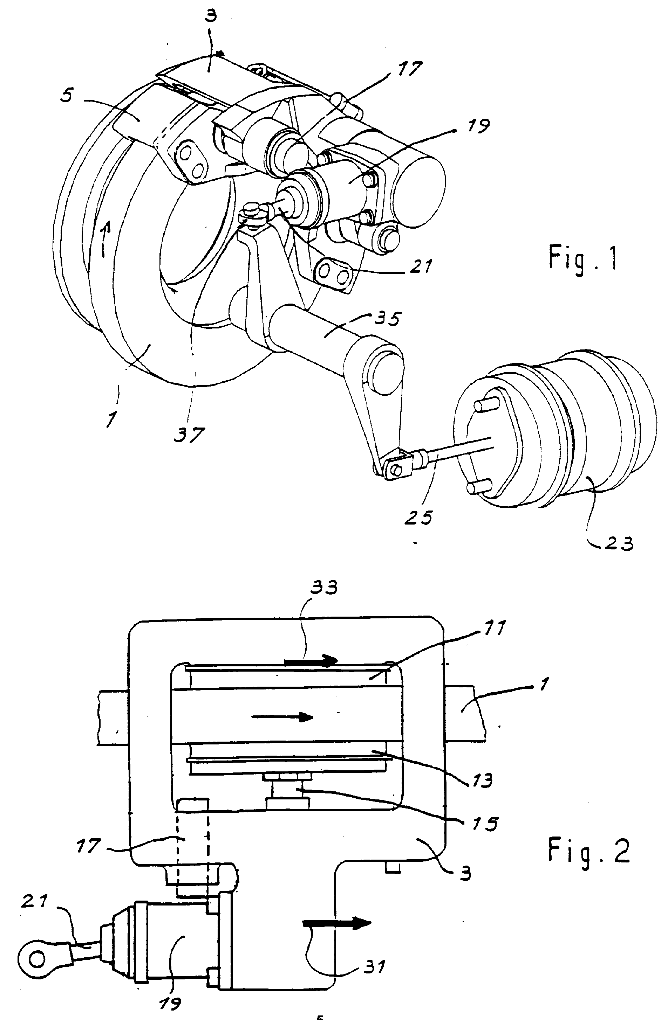

- la Figure 1 représente schématiquement en perspective un frein conforme à la présente invention et
- la Figure 2 est une vue de dessus partielle du frein de la Figure 1 illustrant la répartition des forces au freinage.

En référence maintenant aux Figures, le disque 1 est solidaire en rotation de la roue à freiner. Le frein comporte un étrier 3 et une chape 5. Les patins de freinage 11,13 sont respectivement appliqués sur le disque 1 par l'étrier 3 et par un piston 15 éventuellement pourvu d'un mécanisme de rattrapage automatique d'usure. L'étrier 3 est fixé à la chape par l'intermédiaire d'une colonnette 17. D'une manière connue en soi, les parties arrière de l'étrier 3 et du piston 15 sont écartées l'une de l'autre au moyen d'un mécanisme à coin 19 non représenté en détail car bien connu de l'homme du métier, et fixé à l'étrier 3. Ce mécanisme 19 comporte donc un coin et un poussoir 21 permettant de déplacer le coin entre les surfaces en regard.

Un vase à diaphragme 23, ou équivalent, est fixé à une pièce solidaire de la chape 5 du frein. La tige de poussée 25 de ce vase 23 agit sur le poussoir 21 du mécanisme à coin 19.

Selon un aspect essentiel de l'invention, le poussoir 21 exerce sur le coin une force dont la composante principale est parallèle au plan du disque et dirigée dans le sens de rotation majoritaire de ce dernier (correspondant, bien sur, à la marche avant du véhicule ainsi équipé), et représenté par une flèche sur les Figures. Du fait que l'organe de commande 23 est fixé directement ou indirectement à la chape 5 et prend donc appui sur cette dernière pour engendrer la force qui va agir sur le poussoir 21, la force de réaction est reprise par l'étrier 3 qui reçoit une force 31 parallèle à celle 33 engendrée par la friction du patin 11 sur le disque 1 et dont résultait préalablement la flexion de la colonnette 17. Cette force 31 étant appliquée à l'arrière du piston dans le frein, va permettre à la colonnette 17 de travailler normalement en cisaillement et non plus en flexion.

Par un choix judicieux de l'angle entre le poussoir 21 et l'axe du piston 15, les deux forces parallèles 31 et 33 peuvent être sensiblement équivalentes dans certaines conditions difficiles de travail.

Sur l'exemple représenté, le poussoir 21 et la tige de poussée 25 sont reliées l'une à l'autre par l'intermédiaire d'un levier dont le pivot 35 est également solidaire de la chape 5. Ceci apporte essentiellement deux avantages additionnels, à savoir, d'une part, modifier le rapport entre la force engendrée par le vase 23 et la force appliquée au poussoir 21 et, d'autre part, permettre de disposer le vase 23 ailleurs que dans l'espace restreint au voisinage de la roue et des amortisseurs de celle-ci (non représentés sur les Figures).

Par ailleurs, du fait du déplacement de l'étrier 3 et donc du mécanisme à coin , il est hautement souhaitable que les extrémités du poussoir 21 soient pourvues d'une articulation à rotule 37 pour éviter d'engendrer des efforts parasites sur le poussoir 21.

Bien que seul un mode de réalisation de l'invention ait été décrit, il est évident que l'homme du métier pourra apporter de nombreuses modifications à l'invention sans sortir du cadre défini par les revendications jointes.

Par exemple, le frein pourra comporter deux colonnettes et non une seulement. Le levier pourra affecter une autre forme que celle représentée ou même être totalement absent, l'articulation à rotule étant alors prévue entre le poussoir 21 et la tige de poussoir 25.

## Revendications

1. Frein à disque comportant une chape (5), un étrier coulissant (3) sur au moins une colonnette (17) et un mécanisme d'actionnement, ce dernier comprenant un mécanisme (19) à coin déplaçable longitudinalement entre ledit étrier et un piston pour écarter l'un de l'autre, sous l'action d'un poussoir (21) lui-même mu par la tige de poussée (25) d'un organe de commande (23), caractérisé en ce que ledit organe de commande (23) est solidaire de la chape (5) dudit frein et que ledit poussoir (21) exerce sur le coin une force dont la composante principale est parallèle au plan du disque (1) et dirigée dans le sens de rotation majoritaire de ce dernier, la dite force prenant appui sur la chape (5) et s'opposant à une flexion de la colonnette (17).

2. Frein à disque selon la revendication 1, caractérisé en ce que le poussoir (21) est mu par la tige de poussée (25) par l'intermédiaire d'une pièce (35) faisant levier dont le pivot est solidaire de ladite chape.

3. Frein à disque selon la revendication 2, caractérisé en ce que le poussoir (21) est fixé d'une part à ladite pièce faisant pivot (35) et d'autre part audit coin par des articulations à rotule (37).

## Claims

1. Disk-brake comprising a clevis (5), a caliper (3) sliding on at least one column (17) and an operating mechanism, the latter comprising a mechanism (19) having a wedge displaceable longitudinally between said caliper and a piston, to move them apart, through the action of a pusher (21), which in turn is driven by the pushrod (25) of a drive means (23), characterized in that said drive means (23) is fastened to the clevis (5) of said brake and that said pusher (21) exerts on the wedge a force whose main component is parallel to the plane of the disk (1) and directed in the predominant direction of rotation of the latter, said force bearing against the clevis (5) and opposing the flexion of said column (17).

2. Disk-brake according to Claim 1, characterized in that the pusher (21) is driven by the pushrod (25) with the aid of a member (35) forming a lever whose pivot is fastened to said clevis.

3. Disk-brake according to Claim 2, characterized in that the pusher (21) is fixed on the one hand to said member (35) forming a pivot and on the other hand to said wedge by means of ball joints (37).

## Patentansprüche

1. Scheibenbremse mit einer Kappe (5), einem Sattel, der zumindest auf einem Bolzen (17) verschiebbar ist, und einem Betätigungsmechanismus, wobei dieser letztere einen Mechanismus (19) mit einem Keil aufweist, der logitudinal zwischen dem Sattel und einem Kolben verschiebbar ist, um den einen vom anderen unter der Einwirkung eines Stößels (21), der selbst von der Schubstange (25) einer Antriebseinrichtung (23) bewegt wird, zu entfernen, dadurch gekennzeichnet, daß die Antriebseinrichtung (23) fest mit der Kappe (5) der Bremse verbunden ist und daß der Stößel (21) auf den Keil eine Kraft ausübt, deren Hauptkomponente parallel zur Ebene der Scheibe (1) verläuft und in der Hauptdrehrichtung der letzteren wirkt, wobei sich diese Kraft an der Kappe (5) abstützt und einem Biegen des Bolzens (17) entgegenwirkt.

2. Scheibenbremse nach dem Anspruch 1, dadurch gekennzeichnet, daß der Stößel (21) von der Schubstange (25) mittels eines als Hebel ausgebildeten Teils (35) bewegt wird, dessen Drehachse fest mit der Kappe verbunden ist.

3. Scheibenbremse nach dem Anspruch 2, dadurch gekennzeichnet, daß der Stößel (21) einerseits an dem als Hebel ausgebildeten Teil (35) und andererseits an dem Keil mittels Kugelgelenken (37) befestigt ist.
